# EUROPÄISCHE PATENTSCHRIFT

(11) **EP 2 482 406 B1**
(45) Veröffentlichungstag und Bekanntmachung des Hinweises auf die Patenterteilung: **14.01.2015**
(21) Anmeldenummer: 12152537.2
(22) Anmeldetag: 25.01.2012
(51) Int. Cl.: H02G 3/16, H01L 31/048, H01R 9/24, H01R 13/11

(54) **Elektrische Anschluss- und Verbindungsdose für ein Solarzellenmodul sowie Verfahren zur Herstellung einer elektrischen Verbindung**
Electrical connection and attachment socket for a solar cell module and method for producing an electrical connection
Boîtier de raccordement et de connexion électrique pour un module de cellules solaires ainsi que procédé de fabrication d'une connexion électrique

(30) Priorität: 29.01.2011 DE 102011009717
(43) Veröffentlichungstag der Anmeldung: 01.08.2012
(73) Patentinhaber: Kostal Industrie Elektrik GmbH, 58513 Lüdenscheid (DE)
(72) Erfinder: Schulz, Uwe, 58099 Hagen (DE); Platanos, Pavlos, 58511 Lüdenscheid (DE)
(74) Vertreter: Kerkmann, Detlef

(56) Entgegenhaltungen:
- EP-A2- 1 102 354
- WO-A1-00/46860
- DE-A1-102006 019 210
- DE-A1-102009 012 539
- DE-B3-102004 020 958

## Beschreibung

Die Erfindung betrifft ein Solarzellenmodul, umfassend mit dünnen Leiterbändern angeschlossene Solarzellen, mit einer elektrischen Anschluss- und Verbindungsdose, die eine elektrische Leiterstruktur mit Leiterbahnen zur elektrischen Kontaktierung der Leiterbänder des Solarzellenmoduls mit äußeren Anschlussleitungen aufweist, sowie ein Verfahren zur Herstellung einer elektrischen Verbindung zwischen den Leiterbändern eines Solarzellenmoduls und den Leiterbahnen einer elektrischen Leiterstruktur.

Die Solarzellen in einem Solarzellenmodul sind im Allgemeinen mit dünnen Leiterbändern miteinander verbunden. Diese Leiterbänder weisen typischerweise eine Dicke von wenigen Zehntel Millimetern und eine Breite von einigen Millimetern auf. Diese die einzelnen Solarzellen des Solarzellenmoduls miteinander verbindenden Leiterbänder werden dabei auf der Rückseite der Solarzellen geführt, so dass sie von dort leicht zugänglich sind und direkt zu Anschlusszwecken verwendet werden können.

Zum Anschluss werden die Leiterbänder beispielsweise bei gebräuchlichen Anschluss- und Verbindungsdosen, die dazu einen abnehmbaren Deckel aufweisen, von dem Solarzellenmodul abschnittsweise gelöst und dann von unten her in ein auf dem Solarzellenmodul befestigtes Gehäuseunterteil eingeführt. Die einzelnen Leiterbänder können dann von Hand mit der in dem Gehäuse der Anschluss- und Verbindungsdose vorgesehenen elektrischen Anschlusseinrichtung kontaktiert werden. Die von der elektrischen Leiterstruktur der Anschlusseinrichtung umfassten Leiterbahnen sind dabei beispielsweise Stromschienen, die als Stanz-Biegeteile aus einem Blechmaterial mit einer guten elektrischen Leitfähigkeit hergestellt und zur Bindung der elektrischen Leiterstruktur in entsprechender Anordnung in dem Gehäuseunterteil befestigt sind. Zur Kontaktierung der Leiterbänder mit diesen Stromschienen sind z.B. Klemmfedern vorhanden, die in dazu vorgesehen Anschlussbereichen auf diesen aufgesteckt sind. Die vom Solarzellenmodul, relativ zum Gehäuse der Anschluss- und Verbindungsdose von unten her kommenden, dünnen Leiterbänder werden dabei umgebogen, um dann von oben her über die Klemmfedern mit den Stromschienen kontaktiert und somit an die Anschlussvorrichtung angeschlossen zu werden.

Die deutsche Patentschrift DE 10 2004 020 958 B3 offenbart eine Anschlussklemme nach dem Oberbegriff des Anspruchs 1 bzw nach dem Oberbegriff des Anspruchs 6.

Diese Art der Kontaktierung erfordert eine aufwendige Handhabung der Leiterbänder, die sich nur in sehr beschränktem Umfang automatisieren lässt.

Das erfindungsgemäße Solarzellenmodul ermöglicht dagegen eine weitgehend automatisch realisierbare Kontaktierung der dünnen Leiterbänder und trägt damit nicht unerheblich zur Kosteneinsparung sowie zur Verbesserung der Qualität bei.

Dies wird bei dem Solarzellenmodul gemäß der vorliegenden Erfindung dadurch erreicht, dass flexible elektrische Leiter einerseits mit den Leiterbahnen der elektrischen Leiterstruktur und andererseits mit den Leiterbändern des Solarzellenmoduls jeweils stoffschlüssig elektrisch leitend verbunden sind.

In einer besonders bevorzugten Ausführungsform werden als flexible elektrische Leiter für die elektrische Verbindung zwischen den Leiterbahnen der elektrischen Leiterstruktur und den Leiterbändern des Solarzellenmoduls Drahtgewebebänder insbesondere aus dünnen, verzinnten Kupferdrähten eingesetzt. Die hierbei verwendeten Drahtgewebebänder sind Geflechte aus Drähten mit Einzeldurchmessern von wenigen Hundertstel Millimetern und weisen so bei einer Breite von einigen Millimetern und einer Dicke von knapp einem Millimeter eine deutlich höhere Flexibilität auf als massives Material mit ähnlichen Abmessungen.

Bei dem erfindungsgemäß eingesetzten Verfahren zur Herstellung einer elektrischen Verbindung zwischen einem Leiterband eines Solarzellenmoduls und einer Leiterbahn einer elektrischen Leiterstruktur wird ein flexibler elektrischer Leiter mittels eines ersten, eine stoffschlüssige, elektrisch leitende Verbindung desselben mit der Leiterbahn der elektrischen Leiterstruktur erzeugenden Verbindungsverfahrens mit der Leiterbahn und mittels eines zweiten, eine stoffschlüssige, elektrisch leitende Verbindung desselben mit dem Leiterband des Solarzellenmoduls erzeugenden Verbindungsverfahrens mit dem Leiterband verbunden.

Die flexiblen elektrischen Leiter können bereits vor der Montage der Anschluss- und Verbindungsdose auf dem Solarzellenmodul einseitig mit den Leiterbahnen der elektrischen Leiterstruktur verbunden und auf eine passende Länge vorkonfektioniert sein. Bei der Montage der Anschluss- und Verbindungsdose auf dem Solarzellenmodul muss dann nur noch die elektrische Verbindung zu den Leiterbändern des Solarzellenmoduls hergestellt werden.

Alternativ hierzu ist es jedoch auch möglich, beide Enden der flexiblen elektrischen Leiter erst bei der Montage der Anschluss- und Verbindungsdose auf dem Solarzellenmodul mit ihren jeweiligen Kontaktpartnern zu verbinden. Der vorzugsweise in Form eines Drahtgewebebandes vorliegende flexible elektrische Leiter wird dabei direkt von einer Vorratsrolle zugeführt, durch einen Roboter sowohl mit den Leiterbahnen der elektrischen Leiterstruktur als auch mit den Leiterbändern des Solarzellenmoduls etwa durch eine Schweißverbindung verbunden und entsprechend der dazu benötigten Länge abgeschnitten.

Nachfolgend ist die Erfindung anhand eines Ausführungsbeispiels unter Bezugnahme auf die beigefügte Zeichnung erläutert.

Dabei ist in der einzigen Figur ein Solarzellenmodul 1 in einer räumlichen Ansicht schräg von oben zu sehen. Die einzelnen Solarzellen des Solarzellenmoduls 1, die hier nicht zu erkennen sind, sind mit dünnen Leiterbändern 2 miteinander verbunden, die typischerweise eine Dicke von wenigen Zehntel Millimetern und eine Breite von einigen Millimetern aufweisen. Diese dünnen Leiterbänder 2 sind in einem Anschlussbereich des Solarzellenmoduls 1 durch eine Öffnung in dessen rückseitiger Glasabdeckung zugänglich gemacht und können dort direkt zu Anschlusszwecken verwendet werden.

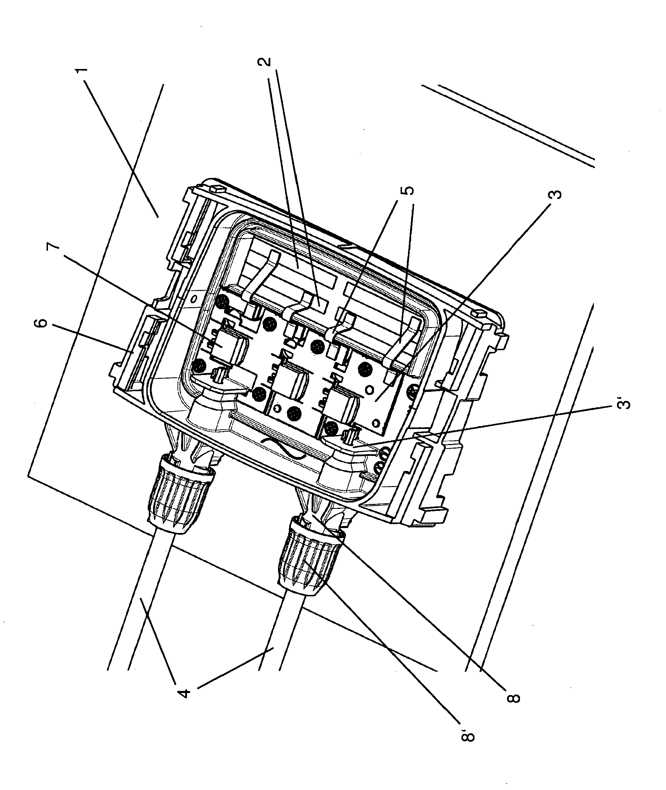

In diesem Anschlussbereich ist eine erfindungsgemäße elektrische Anschluss- und Verbindungsdose auf das Solarzellenmodul 1 aufgesetzt. Zu sehen ist hier das Gehäuse 6 der Anschluss- und Verbindungsdose, von dem ein abnehmbarer Deckel entfernt ist. Die Leiterbänder 2 sind in diesem Zustand durch eine dafür vorgesehene Öffnung im Boden des Gehäuses 6 zugänglich, um mit der in dem Gehäuse 6 vorhandenen Leiterbahnen 3 der elektrischen Leiterstruktur kontaktiert werden zu können. Nach dem Aufsetzen des Deckels auf dem Gehäuse 6 schützt dieses auch die Öffnung in der rückseitigen Glasabdeckung des Solarzellenmoduls 1.
Die elektrische Leiterstruktur umfasst mehrere als Stanz-Biegeteile aus einem Blechmaterial mit einer guten elektrischen Leitfähigkeit hergestellte Leiterbahnen 3. Diese Leiterbahnen 3 dienen dazu, die beiden außen, d.h. in der Fig. 1 innerhalb der Anschluss- und Verbindungsdose rechts liegenden Leiterbänder 2 direkt mit den zum Anschluss der z.B. direkt zu einem Wechselrichter oder zu weiteren Anschluss- und Verbindungsdosen führenden Anschlussleitungen 4 zu verbinden. Die beiden inneren Leiterbänder 2 werden miteinander sowie mit den beiden äußeren Leiterbändern 2 unter Zwischenschaltung jeweils einer sogenannten Bypass-Diode 7 verbunden. Diese Bypass-Dioden 7 sind antiparallel zu den Solarzellen geschaltet und bewirken, dass bei einer abgeschatteten Solarzelle innerhalb eines Solarzellenmoduls 1 diese eine Solarzelle zwar keinen Anteil mehr zur Gesamtspannung des Solarzellenmoduls 1 leistet, der Stromfluss jedoch trotzdem erhalten bleibt. Das Solarzellenmodul 1 zeigt somit lediglich eine verminderte Betriebspannung, fällt jedoch nicht vollständig aus, wie dies ohne die Bypass-Dioden 7 der Fall wäre. Außerdem wird in der abgeschatteten Solarzelle keine Leistung mehr umgesetzt, so dass eine Beschädigung der abgeschatteten Solarzelle vermieden werden kann.

Die beiden Anschlussleitungen 4 sind hier als isolierte Rundleiter ausgeführt, die in Anschlussöffnungen 8 an der Außenseite des Gehäuses 6 eingeführt, und deren Leitungsadern mittels direkt hinter den Anschlussöffnungen 8 im Inneren des Gehäuses angeordneter Schweiß- oder Lötstützpunkte 3' mit den Leiterbahnen 3 elektrisch kontaktiert werden. Durch Überwurfmuttern 8' werden die Anschlussleitungen 4 an den Anschlussöffnungen 8 festgelegt.

Zur Kontaktierung der Leiterbänder 2 mit den Leiterbahnen 3 sind flexible Leiter 5 in Form von Drahtgewebebändern aus dünnen, verzinnten Kupferdrähten vorgesehen. Diese werden mittels des erfindungsgemäßen Verfahrens sowohl mit den Leiterbahnen 3 der elektrischen Leiterstruktur als auch mit den Leiterbändern 2 des Solarzellenmoduls 1 jeweils stoffschlüssig elektrisch leitend verbunden. Bei diesen stoffschlüssigen, elektrisch leitenden Verbindungen handelt es sich um Schweiß- oder Lötverbindungen, wobei sich als Schweißverfahren besonders das Widerstandsschweißen als geeignet erwiesen hat. Beim Widerstandsschweißen werden die miteinander zu verbindenden Bauteile durch einen durch sie hindurch fließenden Strom im Bereich ihrer Kontaktstelle aufgeschmolzen und durch Andrücken aneinander miteinander verbunden. Als Alternative zum Schweißen oder Löten kann auch eine elektrisch leitende Klebeverbindung z.B. mittels eines Silberleitklebers zum Einsatz kommen.

Bei der in der Zeichnung dargestellten Ausführungsform einer erfindungsgemäßen elektrischen Anschluss- und Verbindungsdose sind die Leiterbahnen 3 der elektrischen Leiterstruktur als Stanz-Biegeteile aus einem Blechmaterial mit einer guten elektrischen Leitfähigkeit, beispielsweise aus feuerverzinntem Kupferblech hergestellt. In diesem Falle ist die Verbindung der flexiblen elektrischen Leiter 5 sowohl mit den Leiterbahnen 3 der elektrischen Leiterstruktur als auch mit den Leiterbändern 2 des Solarzellenmoduls 1 jeweils als Schweißverbindung ausgeführt. Durch einen Roboter wird dabei der flexible elektrische Leiter 5 als Drahtgewebeband direkt von einer Vorratsrolle zugeführt und sowohl mit den Leiterbahnen 3 der elektrischen Leiterstruktur als auch mit den Leiterbändern 2 des Solarzellenmoduls jeweils durch eine Schweißverbindung verbunden und entsprechend der dazu benötigten Länge abgeschnitten.

Bei einer alternativen Ausführungsform, bei der die elektrische Leiterstruktur auf einer kupferkaschierten Leiterplatte realisiert ist, wird für die Verbindung der flexiblen elektrischen Leiter 5 mit den Leiterbahnen 3 dieser elektrischen Leiterstruktur bevorzugt eine Lötverbindung eingesetzt, während die Verbindung der flexiblen elektrischen Leiter 5 mit den Leiterbändern 2 des Solarzellenmoduls 1 unabhängig davon als Schweißverbindung ausgeführt wird. Insbesondere bei einer solchen Konstellation ist es besonders vorteilhaft, die flexiblen elektrischen Leiter 5, bei denen es sich auch in diesem Falle um Drahtgewebebänder handelt, bereits vor der Montage der Anschluss- und Verbindungsdose auf dem Solarzellenmodul 1 einseitig mit den Leiterbahnen 3 der elektrischen Leiterstruktur auf der Leiterplatte durch Löten zu verbinden und auf die jeweils passende Länge zu kürzen. Als Lötverfahren können hier das Induktionslöten, das Bügellöten oder das Thermodenlöten verwendet werden. Bei der Montage der Anschluss- und Verbindungsdose auf dem Solarzellenmodul 1 wird dann die elektrische Verbindung der flexiblen elektrischen Leiter 5 zu den Leiterbändern 2 des Solarzellenmoduls 1 ebenfalls durch einen Roboter mittels einer Schweißverbindung hergestellt.

## Patentansprüche

1. Solarzellenmodul, umfassend mit dünnen Leiterbändern (2) angeschlossene Solarzellen, mit einer elektrischen Anschluss- und Verbindungsdose, die eine elektrische Leiterstruktur mit Leiterbahnen (3) zur elektrischen Kontaktierung der Leiterbänder (2) des Solarzellenmoduls (1) mit äußeren Anschlussleitungen (4) aufweist, **dadurch gekennzeichnet, dass** flexible elektrische Leiter (5) einerseits mit den Leiterbahnen (3) der elektrischen Leiterstruktur und andererseits mit den Leiterbändern (2) des Solarzellenmoduls (1) jeweils stoffschlüssig elektrisch leitend verbunden sind.

2. Solarzellenmodul nach Anspruch 1, **dadurch gekennzeichnet, dass** die flexiblen elektrischen Leiter (5) durch Drahtgewebebänder gebildet sind.

3. Solarzellenmodul nach Anspruch 2, **dadurch gekennzeichnet, dass** die Drahtgewebebänder aus dünnen, verzinnten Kupferdrähten bestehen.

4. Solarzellenmodul nach einem der Ansprüche 1 bis 3, **dadurch gekennzeichnet, dass** die Leiterbahnen (3) der elektrischen Leiterstruktur Stanz-Biegeteile aus einem Blechmaterial mit einer guten elektrischen Leitfähigkeit sind.

5. Solarzellenmodul nach einem der Ansprüche 1 bis 3, **dadurch gekennzeichnet, dass** die elektrische Leiterstruktur durch Leiterbahnen (3) auf einer kupferkaschierten Leiterplatte gebildet ist.

6. Verfahren zur Herstellung einer elektrischen Verbindung zwischen einem Leiterband (2) eines Solarzellenmoduls (1) und einer Leiterbahn (3) einer elektrischen Leiterstruktur, **dadurch gekennzeichnet, dass** ein flexibler elektrischer Leiter (5) mittels eines ersten, eine stoffschlüssige, elektrisch leitende Verbindung desselben mit der Leiterbahn (3) der elektrischen Leiterstruktur erzeugenden Verbindungsverfahrens mit der Leiterbahn (3) und mittels eines zweiten, eine stoffschlüssige, elektrisch leitende Verbindung desselben mit dem Leiterband (2) des Solarzellenmoduls (1) erzeugenden Verbindungsverfahrens mit dem Leiterband (2) verbunden wird.

7. Verfahren nach Anspruch 6, **dadurch gekennzeichnet, dass** das erste, eine stoffschlüssige, elektrisch leitende Verbindung erzeugende Verbindungsverfahren einen Lötvorgang umfasst und dass das zweite, eine stoffschlüssige, elektrisch leitende Verbindung erzeugende Verbindungsverfahren ein Widerstandsschweißen umfasst.

8. Verfahren nach Anspruch 6, **dadurch gekennzeichnet, dass** das erste und das zweite, eine stoffschlüssige, elektrisch leitende Verbindung erzeugende Verbindungsverfahren jeweils ein Widerstandsschweißen umfasst.

## Claims

1. Solar cell module, comprising solar cells connected by thin conductor strips (2), having an electrical terminating and junction box showing an electrically conductive structure with printed conductors (3) for the electrical contacting of the conductor strips (2) of the solar cell module (1) with external connecting lines (4), **characterised in that** flexible electrical conductors (5) are each connected in a bonded, electrically conductive manner to the printed conductors (3) of the electrically conductive structure on the one hand and to the conductor strips (2) of the solar cell module (1) on the other hand.

2. Solar cell module according to Claim 1, **characterised in that** the flexible electrical conductors (5) are formed by wire mesh strips.

3. Solar cell module according to Claim 2, **characterised in that** the wire mesh strips are made of fine, tinned copper wires.

4. Solar cell module according to any of Claims 1 to 3, **characterised in that** the printed conductors (3) of the electrically conductive structure are stamped and bent parts made of a sheet material having good electrical conductance.

5. Solar cell module according to any of claims 1 to 3, **characterised in that** the electrically conductive structure is formed by printed conductors (3) on a copper-laminated circuit board.

6. Process for establishing an electrical connection between a conductor strip (2) of a solar cell module (1) and a printed conductor (3) of an electrically conductive structure, **characterised in that** a flexible electrical conductor (5) is connected to the printed conductor (3) by means of a first connection method generating a bonded, electrically conductive connection of the same to the printed conductor (3) of the electrical conductor structure, and to the conductor strip (2) by means of a second connection method generating a bonded, electrically conductive connection of the same to the conductor strip (2) of the solar cell module (1).

7. Process according to Claim 6, **characterised in that** the first connection method generating a bonded, electrically conductive connection involves a soldering process and that the second connection method generating a bonded, electrically conductive connection involves resistance welding.

8. Process according to Claim 6, **characterised in that** the first and the second connection methods generating a bonded, electrically conductive connection each involves resistance welding.

## Revendications

1. Module de cellules solaires comprenant des cellules solaires raccordées par de minces bandes conductrices (2), à une boîte de raccordement et de jonction qui présente une structure conductrice électrique, avec des pistes conductrices (3) pour mettre électriquement en contact les bandes conductrices (2) du module de cellules solaires (1) avec des lignes de raccordement extérieures (4), **caractérisé en ce que** des conducteurs électriques flexibles (5) sont connectés à conduction électrique, par liaison de matière, d'une part aux pistes conductrices (3) de la structure conductrice électrique, et d'autre part aux bandes conductrices (2) du module de cellules solaires (1).

2. Module de cellules solaires selon la revendication 1, **caractérisé en ce que** les conducteurs électriques flexibles (5) sont formés par des bandes en fil métallique tissé.

3. Module de cellules solaires selon la revendication 2, **caractérisé en ce que** les bandes en fil métallique tissé consistent en minces fils de cuivre étamé,

4. Module de cellules solaires selon l'une des revendications 1 à 3, **caractérisé en ce que** les pistes conductrices (3) de la structure conductrice électrique sont des pièces estampées et pliées en tôle possédant une bonne conductibilité électrique.

5. Module de cellules solaires selon l'une des revendications 1 à 3, **caractérisé en ce que** la structure conductrice électrique est formée par des pistes conductrices (3) sur une plaquette de circuits recouverte de cuivre.

6. Procédé de réalisation d'une connexion électrique entre une bande conductrice (2) d'un module de cellules solaires (1) et une piste conductrice (3) d'une structure conductrice électrique, **caractérisé en ce qu'** un conducteur électrique flexible (5) est relié à la piste conductrice (3), au moyen d'un premier procédé de liaison produisant une liaison électriquement conductrice, par liaison de matière, entre celui-ci et la piste conductrice (3) de la structure conductrice électrique, et à la bande conductrice (2) au moyen d'un deuxième procédé de liaison, qui génère une liaison électriquement conductrice, par liaison de matière, entre celui-ci et la bande conductrice (2) du module de cellules solaires (1).

7. Procédé selon la revendication 6, **caractérisé en ce que** le premier procédé de liaison, qui génère une liaison électriquement conductrice par liaison de matière, comprend un processus de brasage, et que le deuxième procédé de liaison, qui génère une liaison électriquement conductrice par liaison de matière, comprend un soudage par résistance.

8. Procédé selon la revendication 6, **caractérisé en ce que** le premier procédé et le deuxième procédé de liaison générant une liaison électriquement conductrice par liaison de matière comprennent chacun un soudage par résistance.
